# EUROPÄISCHE PATENTSCHRIFT

(11) **EP 3 122 999 B1**
(45) Veröffentlichungstag und Bekanntmachung des Hinweises auf die Patenterteilung: **27.06.2018**
(21) Anmeldenummer: 15724554.9
(22) Anmeldetag: 11.05.2015
(51) Int. Cl.: F01D 5/02, F01D 5/06

(54) **RINGFÖRMIGE SPANNMUTTER FÜR EINEN ZUGANKER**
ANNULAR CLAMPING NUT FOR A TIE BAR
ÉCROU DE SERRAGE ANNULAIRE POUR TIRANT

(30) Priorität: 12.05.2014 DE 102014208927; 29.09.2014 DE 102014219643
(43) Veröffentlichungstag der Anmeldung: 01.02.2017
(73) Patentinhaber: Siemens Aktiengesellschaft, 80333 München (DE)
(72) Erfinder: HOFSOMMER, Daniel, 14513 Teltow (DE); KOLK, Karsten, 45479 Mülheim a.d. Ruhr (DE); KURY, Peter, 45257 Essen (DE); RICHTER, Matthias, 12247 Berlin (DE); SCHULZ, Michael, 12161 Berlin (DE); SPRINGBORN, Dirk, 12203 Berlin (DE)
(86) Internationale Anmeldenummer: PCT/EP2015/060346
(87) Internationale Veröffentlichungsnummer: WO 2015/173182

(56) Entgegenhaltungen:
- DE-A1- 2 542 321
- DE-A1-102008 060 571
- US-A- 5 257 905

## Beschreibung

Die vorliegende Erfindung betrifft eine ringförmige Spannmutter, welche dafür vorgesehen ist, endständig auf einen Zuganker aufgesetzt zu werden, um diesen zu verspannen und welche neben einer zentralen Ausnahme zur Aufnahme des Zugankers parallel zu einer Längsverlaufsrichtung in gleichmäßigen radialen Abständen in Ringumfangsrichtung Durchgänge aufweist, welche parallel zur Längsverlaufsrichtung der zentralen Ausnahme gerichtet und zur Aufnahme von Spannschrauben vorgesehen sind. Weiterhin betrifft die vorliegende Erfindung ein Spannmuttersystem, welches eine derartige Spannmutter umfasst, sowie ein Zugankersystem, welches ebenso ein derartiges Spannmuttersystem umfasst, sowie eine Spannvorrichtung. Darüber hinaus betrifft die Erfindung eine Gasturbine, die ein solches Zugankersystem aufweist, wie ein Verfahren zum Verspannen eines Zugankersystems. Bekannte Spannsysteme einer Turbomaschinen werden beispielsweise in der DE10 2008 060 571 A1 oder in der US 5 257 905 A gezeigt. Gasturbinen, wie auch andere Drehkraftmaschinen weisen typischerweise einen in einem feststehenden Gehäuse drehbaren Rotor, bzw. eine drehbare Welle auf. Im Falle einer Gasturbine werden die feststehenden Baugruppen als Stator bezeichnet. Zwischen der Welle (Rotor) und dem Stator ist typischerweise ein in axialer Richtung verlaufender Strömungskanal für ein Arbeitsmedium angeordnet. Insbesondere Rotoren einer Gasturbine sind üblicherweise betriebsbedingt hohen mechanischen und thermischen Belastungen ausgesetzt. Durch die hohen Temperaturen des Arbeitsmediums und die auf den Rotor wirkenden Kräfte während des Betriebs der Gasturbine werden die Rotorkomponenten stark beansprucht.

Beim Zusammensetzen von Welle und Komponenten einer Drehkraftmaschine werden typischerweise die einzelnen Komponenten mittels eines Zugankers verspannt. Der Zuganker ist im Normalfall von der Welle aufgenommen und in dieser angeordnet. Für das Zusammensetzen von Welle und Komponenten weist jede Komponente typischerweise eine axial verlaufende Ausnehmung auf, durch welche der Zuganker verläuft. Zur Verspannung des Zugankers kann endständig auf den Zuganker eine Schraubenmutter aufgesetzt werden, welche bei Verspannen die einzelnen Komponenten fixiert und den Zuganker unter mechanische Spannung setzt. Die Komponenten sind folglich auf dem Zuganker miteinander in Presskontakt und können so die auf sie wirkenden Drehkräfte bei Betrieb der Drehkraftmaschine geeignet übertragen.

In manchen Gasturbinentypen wie auch in manchen Drehkraftmaschinen werden Spannmuttern mit Vielfach-Spannschrauben zum Verspannen des Zugankers eingesetzt. Vielfach-Spannschrauben sind als ein Satz an Einzelspannschrauben zu verstehen, welche nach einzelner Verspannung die Spannmutter mit einer ausreichenden Gesamtverspannkraft beaufschlagen können. Aufgrund der mitunter hohen Temperaturen, die bei Betrieb der Drehkraftmaschine auf die Spannmutter einwirken können, kann es zu einem Entweichen des Schmiermittels an den Spannschrauben kommen sowie möglicherweise zu mikroskopischen Verformungen, so dass etwa bei Wartung das Lösen der Spannschrauben eine oder mehrere von diesen festsitzen und nicht mehr mechanisch gelöst werden können. In einem solchen für den Betreiber der Drehkraftmaschine besonders ungünstigen Fall kann mitunter die Demontierung und damit eine Wartung der Maschine nicht mehr erfolgen. Um dennoch eine Demontierung vornehmen zu können, kommt für den Betreiber lediglich die Zerstörung der Spannmutter in Frage, welche jedoch die Zerstörung des Zugankers und damit der gesamten Drehkraftmaschine zur Folge haben kann.

Weiterhin ergibt es sich als nachteilig, dass während des Verspannens des Zugankers die Spannkraft über die einzelnen Einzelspannschrauben in der Spannmutter aufgebracht werden muss. Da die Spannmutter einerseits viele solcher Einzelspannschrauben aufweisen muss, um die hohe Gesamtspannkraft aufbringen zu können, erweist sich der Vorgang des Verspannens als sehr zeitaufwändig. Weiterhin ist es nicht ausgeschlossen, dass einige der Einzelspannschrauben auch beim Verspannen selbst verkannten, da mitunter einige Einzelspannschrauben verhältnismäßig mehr zur Gesamtspannkraft beitragen als andere. In anderen Worten ist ganz wesentlich, alle Einzelspannschrauben gleichmäßig anzuziehen, damit bei dem sehr zeitaufwändigen Verspannungsvorgang unter den hohen Spannkräften einzelne Spannschrauben kein Verkanten erleiden. Dies ist jedoch aus praktischen Gründen sehr schwierig, da schon geringe Unterschiede im Hub der Einzelspannschrauben zu stark unterschiedlichen Spannkraftbelastungen Anlass geben kann.

Diese Nachteile aus dem Stand der Technik verdeutlichen, dass eine technische Lösung erforderlich ist, um insbesondere bei Spannmuttern mit Vielfach-Spannschrauben eine kontrollierte Verspannung des Zugankersystems sowie eine kontrollierte Demontierung der gesamten Drehkraftmaschine weiterhin zu ermöglichen. Damit soll auch eine Demontierung dann noch möglich sein, wenn eine oder mehrere der Spannschrauben festsitzen. Weiterhin ist es ein technisches Erfordernis, eine Spannmutter vorzuschlagen, die eine vereinfachte Demontierung einer Drehkraftmaschine ermöglichen kann. Insbesondere soll dies für Drehkraftmaschinen zutreffen, die hohen Temperaturen von mitunter über 350°C im Bereich der Welle (bzw. des Rotors) ausgesetzt sind.

Diese der Erfindung zugrundeliegenden Aufgaben werden gelöst durch eine ringförmige Spannmutter gemäß Anspruch 1, ein Spannmuttersystem gemäß Anspruch 6, ein Zugankersystem gemäß Anspruch 7, eine Spannvorrichtung gemäß Anspruch 10, eine Gasturbine gemäß Anspruch 11 und ein Verfahren zum Verspannen eines Zugankersystems gemäß Anspruch 12.

Insbesondere werden die der Erfindung zugrundeliegenden Aufgaben gelöst durch eine ringförmige Spannmutter, welche dafür vorgesehen ist, endständig auf einen Zuganker aufgesetzt zu werden, um diesen zu verspannen, und welche neben einer zentralen Ausnahme zur Aufnahme des Zugankers parallel zu einer Längsverlaufsrichtung in gleichmäßigen radialen Abständen in Ringumfangsrichtung Durchgänge aufweist, welche parallel zur Längsverlaufsrichtung der zentralen Ausnahme gerichtet und zur Aufnahme von Spannschrauben vorgesehen sind, wobei auf der Außenfläche der Spannmuttern, welche insbesondere auf einer der Wandung der zentralen Ausnahme im Wesentlichen gegenüberliegenden Seite angeordnet ist, ein Außengewinde vorgesehen ist, welches im Wesentlichen in Ringumfangsrichtung der Außenfläche (Ringaußenfläche) verläuft.

Weiter werden die der Erfindung zugrundeliegenden Aufgaben gelöst durch ein Spannmuttersystem, welches eine Spannmutter der vorher beschriebenen oder auch der nachher beschriebenen Art umfasst, sowie Spannschrauben, welche durch die Durchgänge der Spannmutter reichen, wobei die Spannschrauben endständig mit einem vereinzelten Spannring in Kontakt sind, welcher nicht von der Spannmutter umfasst ist.

Weiterhin werden die der Erfindung zugrundeliegenden Aufgaben gelöst durch ein Zugankersystem umfassend eine Spannmutter wie vorab oder auch nachfolgend beschrieben, sowie Spannschrauben, welche durch die Durchgänge der Spannmutter reichen, sowie einen Zuganker, welcher endständig durch die zentrale Ausnahme der Spannmutter geführt ist, wobei im Bereich der Außenfläche der Spannmutter eine Spannvorrichtung angeordnet ist, welche mit dem Außengewinde der Spannmutter verschraubt ist.

Weiterhin werden die der Erfindung zugrundeliegenden Aufgaben gelöst durch eine Spannvorrichtung umfassend eine Aussparung, welche ein Innengewinde aufweist, welches auf ein passendes Außengewinde einer Spannmutter aufgeschraubt werden kann, sowie wenigstens ein Hebemittel, welches dazu ausgebildet ist, bei bestimmungsgemäßer Betätigung die Spannvorrichtung mit einer Spannkraft zu beaufschlagen, wobei das wenigstens eine Hebemittel sich dabei gegen eine Bauteilfläche einer einen Zuganker umfassenden Gasturbine abstützen kann.

Weiterhin werden die der Erfindung zugrundeliegenden Aufgaben gelöst durch eine Gasturbine umfassend ein vorab wie auch nachfolgend beschriebenes Zugankersystem.

Darüber hinaus werden die der Erfindung zugrundeliegenden Aufgaben gelöst durch ein Verfahren zum Verspannen eines Zugankersystems, wie vorab und auch nachfolgend beschrieben, insbesondere eines Zugankersystems einer Gasturbine wie vorab und auch nachfolgend beschrieben, welches folgende Schritte umfasst:
- Vorspannen des Zugankers durch Betätigen der Spannvorrichtung;
- Nachspannen des Zugankers durch Anziehen der Spannschrauben in den Durchgängen.

Hinsichtlich des erfindungsgemäßen Verfahrens ist anzumerken, dass vor Ausführen des Verfahrens es erforderlich ist, die Spannvorrichtung mit der Spannmutter derart zu verschrauben, dass ein Vorspannen und Nachspannen des Zugankersystems erfolgen kann. Hierbei kann etwa die Spannvorrichtung auf die Spannmutter erst dann aufgeschraubt werden, wenn diese bereits mit dem Zuganker selbst verschraubt wurde. Ebenfalls ist es denkbar, dass beide bereits miteinander verschraubt sind zu einem Zeitpunkt, nach welchem dann die Spannmutter auf den Zuganker aufgeschraubt wird. Erst nach Verbindung von Spannmutter und Spannvorrichtung kann ein Vorspannen und Nachspannen nach dem erfindungsgemäßen Verfahren erfolgen.

Erfindungsgemäß ist vorgesehen, dass die ringförmige Spannmutter, welche eine Mehrzahl an Durchgängen aufweist, durch welche jeweils eine der Mehrzahl an Spannschrauben (d.h. Vielfach-Spannschrauben) reichen kann, darüber hinaus auf der Außenfläche ein Außengewinde aufweist, welches im Wesentlichen in Ringumfangsrichtung der Außenfläche verläuft. Ein Verlauf des Außengewindes in Ringumfangsrichtung betrifft hierbei ein Gewinde, welches einen Gewindehub in Längsverlaufsrichtung der zentralen Ausnahme der Spannmutter aufweist. Diese Längsverlaufsrichtung entspricht der Längsrichtung eines Zugankers, welcher in der Ausnahme der Spannmutter aufgenommen sein kann.

Demgemäß kann die Spannmutter in zweifacher Weise durch eine Kraftbeaufschlagung verspannt werden. Zum einen kann die Spannmutter wie nach dem Stand der Technik vorgesehen, durch Anziehen der Mehrzahl an durch die Durchgänge reichenden Spannschrauben verspannt werden, ebenso kann die Spannmutter jedoch auch über das Außengewinde mit einer Verspannkraft belegt werden. Diese Verspannkraft kann erfindungsgemäß durch die Spannvorrichtung aufgebracht werden, welche ein geeignetes Gegengewinde zum Außengewinde der Spannmutter aufweist, und mit dieser wenigstens teilweise verschraubt ist. Durch die Verschraubung bzw. durch eine weitere Kraftbeaufschlagung mittels der Spannvorrichtung kann die Spannmutter mit einer zusätzlichen Verspannkraft beaufschlagt werden.

Durch die Verspannung der Spannmutter mittels der Spannvorrichtung kann die Spannung von den Spannschrauben wenigstens teilweise genommen werden, so dass diese erleichtert ein- bzw. ausgedreht werden können. Insbesondere beim Lösen der Spannschrauben zur Entlastung des mit den ringförmigen Spannmuttern versehenen Zugankers können diese unter geringerem Kraftaufwand aus den Durchgängen entfernt werden. In anderen Worten vermindert sich aufgrund der wenigstens teilweisen Entlastung die Wahrscheinlichkeit für ein Festsitzen dieser Spannschrauben.

Gemäß dem erfindungsgemäßen Verfahren kann ein Verspannen des Zugankers mittels der Spannmutter in zwei typischerweise aufeinanderfolgenden Schritten erfolgen. Zunächst kann ein Vorspannen des Zugankers durch Verspannen der Spannvorrichtung vorgenommen werden, wodurch der Zuganker mit einer Vorspannkraft belegt wird. Diese kann bspw. 90 % der gesamten Verspannkraft betragen. Das Nachspannen des Zugankers, also das Verspannen auf die gesamte Spannkraft, kann bspw. durch Verspannen der Spannschrauben in den jeweiligen Durchgängen erfolgen. Nach erfolgtem Verspannen kann dann die Spannvorrichtung von der Spannmutter gelöst werden, wobei die Gesamtverspannkraft nun alleinig durch die Spannschrauben in den Durchgängen der Spannmutter aufgebracht wird. Während des Nachspannens sind jedoch die einzelnen Spannschrauben nicht mit der vollständigen Gesamtverspannkraft belegt, so dass diese verhältnismäßig kontrollierter und unter geringerem Widerstand eingedreht werden können.

Ebenso kann weiterhin das Lösen der Verspannung des Zugankersystems schrittweise erfolgen, indem nämlich bspw. die Vorspannung durch Verspannen des Zugankers mittels der Spannvorrichtung zunächst wenigstens teilweise gelöst wird, um so die Spannung auf den einzelnen Spannschrauben zu vermindern. Nach diesem Entlastungsvorgang können die einzelnen Spannschrauben gelöst werden, wobei eine geringere Kraft zum Lösen dieser Spannschrauben erforderlich ist. Damit wird auch das Risiko zur Ausbildung von festsitzenden Schrauben deutlich vermindert. Eine Demontierung des Zugankersystems ist damit erleichtert möglich.

Die erfindungsgemäße ringförmige Spannmutter sowie die Spannvorrichtung, das Spannmuttersystem bzw. Zugankersystem erlauben folglich eine mitunter schnellere und einfachere Demontierung des Zugankersystems. Da die einzelnen Spannschrauben nur bei einer verminderten Spannkraft gelöst werden müssen, ist auch kein Nachfetten der Spannschrauben erforderlich, da die Spannschrauben nur mehr unter geringerer Kraftaufwendung gedreht werden müssen.

An dieser Stelle soll darauf hingewiesen werden, dass Spannschrauben, soweit nicht anders angegeben, im Sinne von ersten Spannschrauben zu verstehen sind. Damit unterscheiden sich die Spannschrauben von weiteren Spannschrauben, welche nachfolgend als zweite Spannschrauben eingeführt werden. Ist also nichts weiter gesagt, bzw. geht der Bezug nicht eindeutig aus dem Zusammenhang hervor, bezieht sich der Begriff der Spannschrauben auf die jeweils ersten Spannschrauben.

Gemäß einer ersten vorteilhaften Ausführungsform der erfindungsgemäßen Spannmutter ist vorgesehen, dass jeweils zwei benachbarte Durchgänge (mit gleichem radialem Abstand) in Umfangsrichtung voneinander gleich beabstandet sind. Hierdurch kann eine weitgehend gleich verteilte Verspannkraft durch die Spannschrauben über die Spannmutter auf den Zuganker ausgeübt werden. Die Anzahl der Durchgänge ist hierbei beliebig, ist jedoch durch die Geometrie und die Größe der ringförmigen Spannmutter begrenzt. Eine Anpassung der Anzahl der Durchgänge kann im Einzelfall erfolgen.

Ausführungsgemäß ist es auch möglich, dass wenigstens zwei Reihen an Durchgängen vorgesehen sind, welche jeweils unterschiedliche radiale Abstände aufweisen, wobei jedoch innerhalb einer Reihe der radiale Abstand konstant ist. Die radialen Abstände sind hierbei in Bezug auf den Mittelpunkt der zentralen Ausnahme der Spannmutter gemessen. Einzelne benachbarte Durchgänge unterschiedlicher Reihen, können zudem in Ringumfangsrichtung versetzt zueinander angeordnet sein.

Gemäß einer weiteren bevorzugten Ausführungsform der Erfindung ist vorgesehen, dass wenigstens ein Teil der Wandung der zentralen Ausnahme als Innengewinde ausgebildet ist, welches im Wesentlichen in Ringumfangsrichtung der Wandung verläuft. Ganz besonders bevorzugt ist die gesamte Wandung als Innengewinde ausgebildet. Demgemäß kann die Spannmutter direkt über die zentrale Ausnahme bzw. über deren Wandung mit einer Verspannkraft beaufschlagt werden. Folglich steht eine verhältnismäßig große Kraftbeaufschlagungsfläche an der Spannmutter zur Verfügung, wodurch der Zuganker mit einer verhältnismäßig großen Kraft beaufschlagt werden kann.

Gemäß einer weiteren Ausführungsform der Erfindung ist vorgesehen, dass die Spannmutter derart ausgebildet ist, dass die Durchgänge in Längsverlaufsrichtung eine stufige Verengung aufweisen. Insbesondere ist die stufige Verengung aller Durchgänge auf gleichem Niveau der Spannmutter in Längsverlaufsrichtung vorgesehen. Die stufige Verengung erlaubt die Kraftbeaufschlagung der Spannmutter in dem Verengungsbereich über einen geeignet passenden Kopf einer Spannschraube, so dass auch auf ein Innengewinde in den Durchgängen verzichtet werden kann.

Gemäß einer weiteren besonders bevorzugten Ausführungsform der Spannmuttern ist vorgesehen, dass das Außengewinde auf der Außenfläche lediglich einen Teil der Außenfläche der Spannmutter einnimmt und insbesondere in Längsverlaufsrichtung bei stufiger Verengung der Durchgänge lediglich auf einem Niveau in Längsverlaufsrichtung vorgesehen ist, auf welchem ein verengter Abschnitt der Durchgänge vorliegt. Die Kraftbeaufschlagung der Spannmutter kann folglich auf dem Außengewinde in einem Bereich erfolgen, an welchem mitunter die Spannschrauben die Spannmutter nicht mit hohen Materialspannungen belegen. Vielmehr kann ein Materialbereich der Spannmutter mit einer Verspannkraft beaufschlagt werden, der nur geringere Materialverspannungen aufweist. Auf diese Weise kann die Verspannkraft über die Spannmutter verhältnismäßig gleichmäßig verteilt werden, und eine Materialermüdung über das Volumen der Spannmutter kann statistisch vermindert werden.

Gemäß einer bevorzugten Ausführungsform des erfindungsgemäßen Spannmuttersystems ist vorgesehen, dass der Spannring eine zentrale Aussparung aufweist, welche konzentrisch zur zentralen Ausnahme der Spannmutter ausgerichtet ist. Der Spannring kann geeignet zur Vermittlung von Spannkraft eingesetzt werden, er kann jedoch auch zu einer vergleichsmäßigen Abstützung der Spannschrauben gegen eine geeignete Gegenfläche vorgesehen sein.

Gemäß einer ersten besonders bevorzugten Ausführungsform des erfindungsgemäßen Zugankersystems ist vorgesehen, dass die Spannvorrichtung als hydraulische Hebevorrichtung ausgebildet ist. Folglich kann die Spannschraube hydraulisch mit einer Verspannkraft belegt werden, indem nämlich die hydraulische Hebevorrichtung nach erfolgter Verbindung von Spannschraube und Zugankersystem diese mit einer Druckkraft (oder Zugkraft) beaufschlagt und damit die Spannmutter verspannt. Wie weiter oben im Detail erklärt, kann die Verspannung im Sinne einer Vorspannung erfolgen, muss also nicht die gesamte Verspannkraft auf die Spannmutter aufbringen. Ausführungsgemäß kann jedoch auch die gesamte Verspannkraft mittels der Spannvorrichtung aufgebracht sein.

Alternativ oder auch zusätzlich kann die Spannvorrichtung als mit zweiten Spannschrauben versehene Hebevorrichtung ausgebildet sein. Hierbei dienen die zweiten Spannschrauben zur Beaufschlagung der Spannvorrichtung mit einer Hebekraft, welche über die Spannvorrichtung an die mit dieser in kraftschlüssigem Kontakt stehende Spannmutter übertragen wird. In anderen Worten kann die Spannmutter in zweierlei Weisen über erste Spannschrauben und zweite Spannschrauben mit einer Verspannkraft belegt werden. Da die zweiten Spannschrauben einen Teil der Verspannkraft aufbringen, liegen die ersten Spannschrauben unter verhältnismäßig geringerer Verspannkraft vor und sind dadurch entlastet.

Gleichermaßen können die Hebemittel der Spannvorrichtung hydraulisch ausgebildet sein oder aber als Spannschrauben, welcher selbst durch geeignete Gewindegänge der Spannvorrichtung geschraubt sind.

Damit das Innengewinde der Ausnahme der Spannmutter auf ein passendes Außengewinde eines Zugankers einer Gasturbine geschraubt werden kann, ist erforderlich, dass dieses wenigstens ein Innengewinde eines Durchmessers von wenigstens 100mm Durchmessern aufweist. Ebenfalls müssen die Hebemittel dazu ausgebildet sein, die Spannvorrichtung mit einer geeigneten Spannkraft (Hebekraft) beaufschlagen zu können.

Gemäß einer bevorzugten Ausführungsform des erfindungsgemäßen Verfahrens ist vorgesehen, dass weiterhin die folgenden Schritte umfasst sind: Entspannen der Spannvorrichtung und Lösen der Spannvorrichtung von der Spannmutter. Nachfolgend kann gewährleistet werden, dass die Gesamtverspannkraft ausschließlich von den Spannschrauben in der Spannmutter aufgebracht wird, wobei jedoch während des Verspannens die einzelnen Spannschrauben mittels der Spannvorrichtung entlastet sind.

Nachfolgend soll die Erfindung anhand einzelner Figuren im Detail näher erklärt werden. Hierbei sei darauf hingewiesen, dass die Komponenten, welche mit gleichen Bezugszeichen versehen sind, gleiche technische Wirkungen aufweisen.

Ebenfalls sei darauf hingewiesen, dass die nachfolgend beschriebenen technischen Merkmale in beliebiger Kombination miteinander beansprucht werden, soweit die Kombination die der Erfindung zugrundeliegenden Aufgaben lösen kann.

Fernerhin ist darauf hinzuweisen, dass die Figuren lediglich schematisch zu verstehen sind, und keine Beschränkung hinsichtlich der Ausführbarkeit der Erfindung erlauben.

Hierbei zeigen:
- Figur 1: eine seitliche Schnittansicht durch eine Ausführungsform eines erfindungsgemäßen Spannmuttersystems, welches eine Ausführungsform der erfindungsgemäßen Spannmutter umfasst.
- Figur 2: eine seitliche Schnittansicht durch eine Ausführungsform eines erfindungsgemäßen Zugankersystems, welches von einer Drehkraftmaschine bzw. einer Gasturbine umfasst sein kann, und eine Ausführungsform der erfindungsgemäßen Spannmutter umfasst.
- Figur 3: eine weitere Ausführungsform eines erfindungsgemäßen Zugankersystems in seitlicher Schnittansicht, welches ebenfalls wieder von einer Drehkraftmaschine bzw. einer Gasturbine umfasst sein kann, und eine Ausführungsform der erfindungsgemäßen Spannmutter umfasst.
- Figur 4: eine perspektivische Teilschnittansicht durch eine Ausführungsform einer erfindungsgemäßen Gasturbine, welche eine Ausführungsform des erfindungsgemäßen Zugankersystems aufweist.
- Figur 5: eine Ausführungsform des erfindungsgemäßen Verfahrens in flussdiagrammatischer Darstellung.

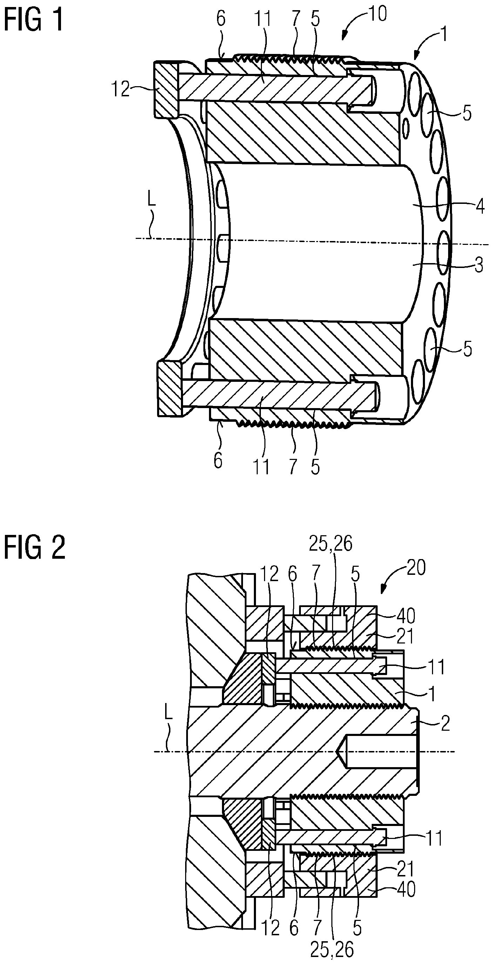

Figur 1 zeigt eine seitliche Schnittansicht durch eine erste Ausführungsform eines erfindungsgemäßen Spannmuttersystems 10, welches neben einer Ausführungsform einer erfindungsgemäßen Spannmutter 1, eine Anzahl an Spannschrauben 11 (erste Spannschrauben 11) sowie einen Spannring 12 aufweist. Die Spannmutter 1 weist neben einer zentralen Ausnahme 3 zur Aufnahme eines Zugankers 2 (vorliegend nicht gezeigt) parallel zu der dargestellten Längsverlaufsrichtung L eine Anzahl an Durchgängen 5 auf, welche in gleichmäßig radialen Abständen in Ringumfangsrichtung angeordnet sind. Die Durchgänge weisen einen Richtungsverlauf auf, welcher im Wesentlichen parallel zur Längsverlaufsrichtung L ist. Durch die Durchgänge 5 sind jeweils Spannschrauben 11 geführt, welche endständig mit einem Spannring 12 derart kontaktiert sind, dass dieser die Enden der Spannschrauben 11 abstützt. Der Spannring 12 weist eine nicht weiter mit Bezugszeichen versehene zentrale Aussparung auf, die konzentrisch zu der zentralen Ausnahme 3 der Spannmutter 1 angeordnet ist. Der Spannring 12 selbst liegt typischerweise vereinzelt von der Spannmutter vor und wird auf die Welle bzw. den Zuganker (vorliegend nicht gezeigt) separat aufgezogen.

Zum Verspannen des Spannmuttersystems 10 werden die in den einzelnen Durchgängen 5 befindlichen Spannschrauben 11 geeignet eingedreht, so dass bei entsprechender Fixierung der Spannschrauben 11 bzw. der Spannmutter 1 auf den nicht weiter gezeigten Zuganker 2 eine Spannkraft übertragen wird. Ausführungsgemäß weisen die Spannschrauben 11 einen Schraubenkopf auf, welcher nach Verspannen der Spannmutter 1 auf einer Materialstufe in einem jeweiligen Durchgang 5 aufliegen kann und eine Kraftbeaufschlagung der Spannmutter 1 zur Folge hat. Typischerweise haben die Durchgänge auch ein Innengewinde, in welches die Spannschrauben eingedreht werden können.

Figur 2 zeigt eine Ausführungsform des erfindungsgemäßen Zugankersystems 20, welches in seitlicher Schnittansicht dargestellt ist. Das Zugankersystem 20 weist neben einer Ausführungsform der erfindungsgemäßen Spannmutter 1 einen Zuganker 2 auf, welcher über ein geeignetes Gewinde im Bereich der Wandung 4 der zentralen Ausnahme 3 der Spannmutter 1 mit der Spannmutter 1 verschraubt ist. Zur Kraftübertragung beim Verspannen der Spannmutter 1 sind einerseits Spannschrauben 11 vorgesehen, welche durch die Durchgänge 5 der Spannmutter 1 reichen und an ihrem Ende einen Spannring 12 aufweisen. Der Spannring 12 dient zur Abstützung gegen Komponenten der Gasturbine (30).

Zusätzlich zu den bisher bereits bekannten Spannschrauben 11 weist die Spannmutter 1 eine Schraubenverbindung zu einer Spannvorrichtung 21 auf, welche mit der Spannmutter 1 im Bereich der Außenfläche 6 über ein Außengewinde 7 verbunden ist. Die Spannvorrichtung 21 ist hierbei als hydraulische Hebevorrichtung ausgebildet, und stützt sich ebenfalls wiederum gegen Komponenten des Lagergehäuses ab, so dass nach entsprechender Betätigung der hydraulischen Hebevorrichtung 21 vermittelt über die Gewindeverbindung, die Spannmutter 1 mit einer Verspannkraft belegt wird. Genauer gesagt weist die Spannvorrichtung 21 eine Aussparung 25 auf, welche ein Innengewinde 26 aufweist, welches auf das passende Außengewinde 7 der Spannmutter 2 aufgeschraubt werden kann, sowie wenigstens ein Hebemittel 40, welches dazu ausgebildet ist, bei bestimmungsgemäßer Betätigung die Spannvorrichtung 21 mit einer Spannkraft zu beaufschlagen, wobei das wenigstens eine Hebemittel 40 sich dabei gegen eine Bauteilfläche (Komponente) der den Zuganker 2 umfassenden Gasturbine 30 abstützen kann. Beim Verspannen des Zugankers 2 kann bspw. gemäß einer Ausführungsform des erfindungsgemäßen Verfahrens, zunächst die Spannvorrichtung 21 betätigt werden, wodurch die Spannmutter 1 mit einer Vorspannkraft beaufschlagt wird. Nachträglich werden die Spannschrauben 11 angezogen, und vermitteln einen weiteren Anteil an der Gesamtverspannkraft. Wiederum danach kann die Spannvorrichtung 21 von der Spannmutter 1 entfernt werden, indem sie entlastet und von dem Außengewinde 7 abgeschraubt wird.

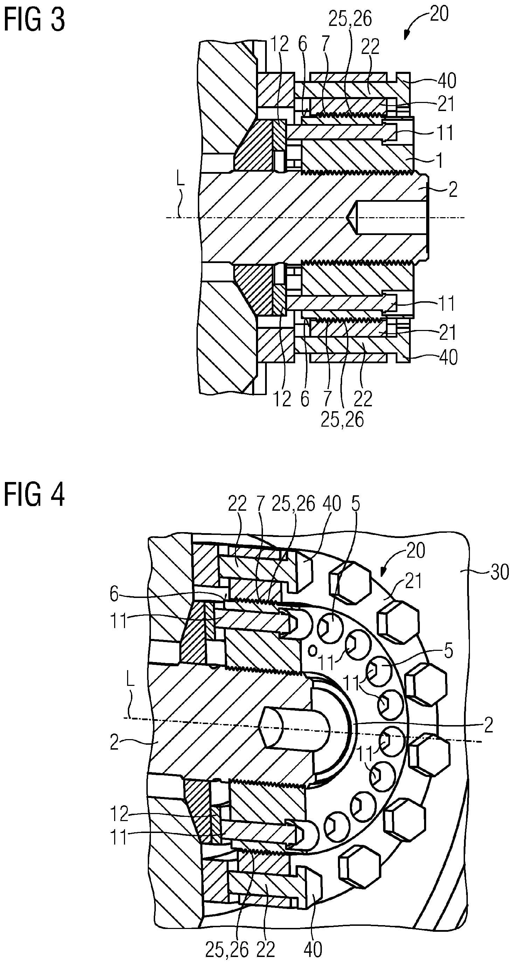

Figur 3 zeigt eine weitere mögliche Ausführungsform des erfindungsgemäßen Zugankersystems 20, welches sich von dem in Figur 2 gezeigten Zugankersystem 20 lediglich dahingehend unterscheidet, dass die Spannvorrichtung 21 nun durch eine Schraubenhubvorrichtung ersetzt ist. Die Schraubenhubvorrichtung ist derart ausgebildet, dass mittels zweiter Spannschrauben 22 eine Kraftbeaufschlagung der Spannmutter 1 vermittelt wieder über eine Gewindeverbindung von Spannvorrichtung 21 und Schraubenmutter 1 erfolgen kann. Zum Verspannen des Zugankers 2 kann so bspw. eine Vorspannkraft durch Anziehen der zweiten Spannschrauben 22 erfolgen, wobei die gesamte Verspannkraft letztlich dadurch erreicht wird, dass auch die ersten Spannschrauben 11 entsprechend die Spannmutter 1 mit einer Spannkraft belegen.

Figur 4 zeigt eine weitere Ausführungsform des erfindungsgemäßen Zugankersystems 20, welches von einer Gasturbine 30 umfasst ist. Hierbei gleicht im Wesentlichen die Ausführungsform des Zugankersystems 20 der in Figur 3 gezeigten Ausführungsform, wobei jedoch die perspektivische Darstellung einzelne Bauteile wie bspw. die ersten Spannschrauben klarer zeigt.

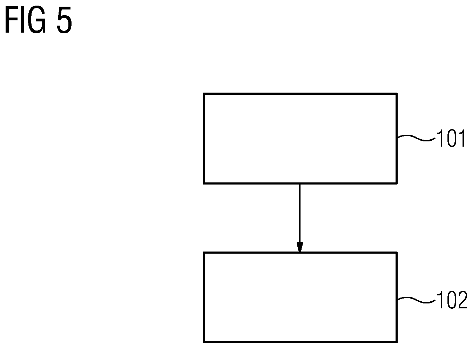

Figur 5 zeigt in flussdiagrammatischer Darstellung eine bevorzugte Ausführungsform des erfindungsgemäßen Verfahrens zum Verspannen eines Zugankersystems 20 (vorliegend nicht gezeigt) bzw. eines von einer Gasturbine 30 (vorliegend ebenfalls nicht gezeigt) umfassten Zugankersystems 20, welches folgende Schritte umfasst:
- Vorspannen des Zugankers 2 durch Betätigen der Spannvorrichtung 21 (erster Verfahrensschritt 101);
- Nachspannen des Zugankers 2 durch Anziehen der Spannschrauben 11 in den Durchgängen 5 (zweiter Verfahrensschritt 102).

In zwei nachfolgenden, fakultativen Verfahrensschritten kann vorgesehen sein, dass die Spannvorrichtung 21 entspannt wird und die Spannvorrichtung 21 von der Spannmutter 1 gelöst wird.

Weitere Ausführungsformen ergeben sich aus den Unteransprüchen.

## Patentansprüche

1. Ringförmige Spannmutter (1), welche dafür vorgesehen ist, endständig auf einen Zuganker (2) aufgesetzt zu werden, um diesen zu verspannen, und welche neben einer zentralen Ausnahme (3) zur Aufnahme des Zugankers (2) parallel zu einer Längsverlaufsrichtung (L), in gleichmäßigen radialen Abständen in Ringumfangsrichtung Durchgänge (5) aufweist, welche parallel zur Längsverlaufsrichtung (L) der zentralen Ausnahme (3) gerichtet und zur Aufnahme von Spannschrauben (11) vorgesehen sind,
**dadurch gekennzeichnet, dass** auf der Außenfläche (6) der Spannmutter (1), welche insbesondere auf einer der Wandung (4) der zentralen Ausnahme (3) im Wesentlichen gegenüber liegenden Seite angeordnet ist, ein Außengewinde (7) vorgesehen ist, welches im Wesentlichen in Ringumfangsrichtung der Außenfläche (6) verläuft.

2. Spannmutter gemäß Anspruch 1,
**dadurch gekennzeichnet, dass** jeweils zwei benachbarte Durchgänge (5) in Ringumfangsrichtung voneinander gleich beabstandet sind.

3. Spannmutter gemäß einem der vorhergehenden Ansprüche,
**dadurch gekennzeichnet, dass** wenigstens ein Teil der Wandung (4) der zentralen Ausnahme (3) als Innengewinde ausgebildet ist, welches im Wesentlichen in Ringumfangsrichtung der Wandung (4) verläuft.

4. Spannmutter gemäß einem der vorhergehenden Ansprüche,
**dadurch gekennzeichnet, dass** die Durchgänge (5) in Längsverlaufsrichtung (L) eine stufige Verengung aufweisen.

5. Spannmutter gemäß einem der vorhergehenden Ansprüche,
**dadurch gekennzeichnet, dass** das Außengewinde (7) auf der Außenfläche (6) lediglich einen Teil der Außenfläche (6) der Spannmutter (1) einnimmt und insbesondere in Längsverlaufsrichtung (L) bei stufiger Verengung der Durchgänge (5) lediglich auf einem Niveau in Längsverlaufsrichtung (L) vorgesehen ist, auf welchem ein verengter Abschnitt der Durchgänge vorliegt.

6. Spannmuttersystem (10) umfassend eine Spannmutter (1) gemäß einem der vorangehenden Ansprüche, sowie Spannschrauben (11), welche durch die Durchgänge (5) der Spannmutter (1) reichen, wobei die Spannschrauben (11) endständig mit einem vereinzelten Spannring (12) in Kontakt sind, welcher nicht von der Spannmutter (1) umfasst ist.

7. Zugankersystem (20) umfassend eine Spannmutter (1) gemäß einem der vorangehenden Ansprüche 1 bis 5, sowie Spannschrauben (11), welche durch die Durchgänge (5) der Spannmutter (1) reichen, sowie einen Zuganker (2), welcher endständig durch die zentrale Ausnahme (3) der Spannmutter (1) geführt ist, wobei im Bereich der Außenfläche (6) der Spannmutter (1) eine Spannvorrichtung (21) angeordnet ist, welche mit dem Außengewinde (7) der Spannmutter (1) verschraubt ist.

8. Zugankersystem gemäß Anspruch 7,
**dadurch gekennzeichnet, dass** die Spannvorrichtung (21) als hydraulische Hebevorrichtung ausgebildet ist.

9. Zugankersystem gemäß Anspruch 7,
**dadurch gekennzeichnet, dass** die Spannvorrichtung (21) als mit zweiten Spannschrauben (22) versehene Hebevorrichtung ausgebildet ist.

10. Spannvorrichtung umfassend eine Aussparung (25), welche ein Innengewinde (26) aufweist, welches auf ein passendes Außengewinde (7) einer Spannmutter (2) aufgeschraubt werden kann, sowie wenigstens ein Hebemittel (40), welches dazu ausgebildet ist, bei bestimmungsgemäßer Betätigung die Spannvorrichtung (21) mit einer Spannkraft zu beaufschlagen, wobei das wenigstens eine Hebemittel (40) sich dabei gegen eine Bauteilfläche einer einen Zuganker (2) umfassenden Gasturbine (30) abstützen kann.

11. Gasturbine (30) umfassend ein Zugankersystem (20) gemäß einem der vorangehenden Ansprüche 7 bis 9.

12. Verfahren zum Verspannen eines Zugankersystems (20) gemäß Ansprüchen 7 bis 9, insbesondere eines Zugankersystems (20) einer Gasturbine (30) gemäß Anspruch 11, welches folgende Schritte umfasst:
- Vorspannen des Zugankers (2) durch Betätigen der Spannvorrichtung (21);
- Nachspannen des Zugankers (2) durch Anziehen der Spannschrauben (11) in den Durchgängen (5).

13. Verfahren gemäß Anspruch 12,
**dadurch gekennzeichnet, dass** weiterhin die folgenden Schritte umfasst sind:
- Entspannen der Spannvorrichtung (21) und
- Lösen der Spannvorrichtung (21) von der Spannmutter (1);

## Claims

1. Annular clamping nut (1) which is provided to be placed onto the end of a tie bar (2) in order to tension said tie bar and which has, in addition to a central recess (3) for receiving the tie bar (2), passages (5) with uniform radial spacings in the ring circumference direction which are parallel to a longitudinal direction (L), which passages are directed parallel to the longitudinal direction (L) of the central recess (3) and are provided for receiving clamping screws (11),
**characterized in that**
on the outer surface (6) of the clamping nut (1) which is particularly arranged on a side substantially opposite the wall (4) of the central recess (3), an external thread (7) is provided which runs substantially in the ring circumference direction of the outer surface (6).

2. Clamping nut according to Claim 1,
**characterized in that**
two adjacent passages (5) in each case are spaced apart from one another uniformly in the ring circumference direction.

3. Clamping nut according to one of the preceding claims,
**characterized in that**
at least part of the wall (4) of the central recess (3) is configured as an internal thread which runs substantially in the ring circumference direction of the wall (4).

4. Clamping nut according to one of the preceding claims,
**characterized in that**
the passages (5) exhibit a step-wise narrowing in the longitudinal direction (L).

5. Clamping nut according to one of the preceding claims,
**characterized in that**
the external thread (7) on the outer surface (6) only takes up part of the outer surface (6) of the clamping nut (1) and particularly in the longitudinal direction (L) with the step-wise narrowing of the passages (5), is only provided at a level in the longitudinal direction (L) at which there is a narrowed section of the passages.

6. Clamping nut system (10) comprising a clamping nut (1) according to one of the preceding claims and also clamping screws (11) which extend through the passages (5) in the clamping nut (1), wherein the clamping screws (11) are in contact at the end with a single clamping ring (12) which is not included in the clamping nut (1).

7. Tie bar system (20) comprising a clamping nut (1) according to one of the preceding Claims 1 to 5 and also clamping screws (11) which extend through the passages (5) of the clamping nut (1), and also a tie bar (2) which is guided at the end through the central recess (3) of the clamping nut (1), wherein a clamping device (21) is arranged in the region of the outer surface (6) of the clamping nut (1), which clamping device is screwed with the external thread (7) of the clamping nut (1).

8. Tie bar system according to Claim 7,
**characterized in that**
the clamping device (21) is configured as a hydraulic lifting device.

9. Tie bar system according to Claim 7,
**characterized in that**
the clamping device (21) is configured as a lifting device provided with second clamping screws (22).

10. Clamping device comprising a recess (25) which has an internal thread (26) that can be screwed onto a matching external thread (7) of a clamping nut (2), and also at least one lifting means (40) which is configured, during correct operation, to apply a clamping force to the clamping device (21), wherein the at least one lifting means (40) can rest against a component surface of a gas turbine (30) including a tie bar (2) during this.

11. Gas turbine (30) comprising a tie bar system (20) according to one of the preceding Claims 7 to 9.

12. Method of tensioning a tie bar system (20) according to Claims 7 to 9, in particular a tie bar system (20) of a gas turbine (30) according to Claim 11, which comprises the following steps:
- preloading of the tie bar (2) through actuation of the clamping device (21);
- retensioning of the tie bar (2) by tightening the clamping screws (11) in the passages (5).

13. Method according to Claim 12,
**characterized in that**
furthermore the following steps are included:
- relieving of tension on the clamping device (21) and
- release of the clamping device (21) from the clamping nut (1) .

## Revendications

1. Ecrou (1) annulaire de serrage, prévu pour être mis en bout sur un tirant (2) afin de le serrer, et qui a, outre un évidement (3) central de réception du tirant (2), parallèlement à une direction (L) d'étendue longitudinale, des passages (5), qui sont répartis à des distances radiales uniformes dans la direction de pourtour annulaire, qui sont dirigés parallèlement à la direction (L) d'étendue longitudinale de l'évidement (3) central et qui sont prévus pour la réception de boulons (11) de serrage,
**caractérisé en ce que**
sur la surface (6) extérieure de l'écrou (1) de serrage, qui est disposé notamment d'un côté sensiblement opposé à la paroi (4) de l'évidement (3) central, est prévue un filetage (7), qui s'étend sensiblement dans la direction de pourtour annulaire de la surface (6) extérieure.

2. Ecrou de serrage suivant la revendication 1,
**caractérisé en ce que**
respectivement deux passages (5) voisins sont à une même distance l'un de l'autre dans la direction du pourtour annulaire.

3. Ecrou de serrage suivant l'une des revendications précédentes,
**caractérisé en ce que**
au moins une partie de la paroi (4) de l'évidement (3) central est constituée en taraudage, qui s'étend sensiblement, dans la direction de pourtour annulaire de la paroi (4).

4. Ecrou de serrage suivant l'une des revendications précédentes,
**caractérisé en ce que**
les passages (5) ont un rétrécissement en palier dans la direction (L) d'étendue longitudinale.

5. Ecrou de serrage suivant l'une des revendications précédentes,
**caractérisé en ce que**
le filetage (7) sur la surface (6) extérieure occupe seulement une partie de la surface (6) extérieure de l'écrou (1) de serrage et, notamment dans la direction (L) d'étendue longitudinale au rétrécissement en palier des passages (5), est prévu seulement sur un niveau dans la direction (L) d'étendue longitudinale où se trouve une partie rétrécie des passages.

6. Système (10) à écrou de serrage, comprenant un écrou (1) de serrage suivant l'une des revendications précédentes, ainsi que des boulons (11) de serrage, qui atteignent par les passages (5) l'écrou (1) de serrage, les boulons (11) de serrage étant en bout en contact avec un anneau (12) de serrage individualisé, qui n'est pas englobé par l'écrou (1) de serrage.

7. Système (20) à tirant, comprenant un écrou (1) de serrage suivant l'une des revendications précédentes 1 à 5, ainsi que des boulons (11) de serrage, qui atteignent l'écrou (1) de serrage par les passages (5), ainsi qu'un tirant (2), qui est guidé en bout dans l'évidement (3) central de l'écrou (1) de serrage, dans lequel, dans la région de la surface (6) extérieure de l'écrou (1) de serrage, est disposé un dispositif (21) de serrage, qui est vissé avec le filetage (7) de l'écrou (1) de serrage.

8. Système à tirant suivant la revendication 7,
**caractérisé en ce que**
le dispositif (21) de serrage est constitué en dispositif hydraulique de levage.

9. Système à tirant suivant la revendication 7,
**caractérisé en ce que**
le dispositif (21) de serrage est constitué en dispositif de levage pourvu de deuxième boulon (22) de serrage.

10. Dispositif de serrage, comprenant un évidement (25), qui a un taraudage (26), lequel peut se visser sur un filetage (7) adapté d'un écrou (2) de serrage, ainsi qu'au moins un moyen (40) de levage, conçu pour, lorsqu'il est actionné d'une manière conforme, soumettre le dispositif (21) de serrage à une force de serrage, le au moins un moyen (40) de levage pouvant s'appuyer sur une surface d'un élément d'une turbine (30) à gaz comprenant un tirant (2).

11. Turbine (30) à gaz, comprenant un système (20) à tirant suivant l'une des revendications précédentes 7 à 9.

12. Procédé de serrage d'un système (20) à tirant suivant les revendications 7 à 9, notamment d'un système (20) à tirant d'une turbine (30) à gaz suivant la revendication 11, qui comprend les stades suivants :
- préserrage du tirant (2) par actionnement du dispositif (21) de serrage ;
- post-serrage du tirant (2) en vissant les boulons (11) de serrage dans les passages (5).

13. Procédé suivant la revendication 12,
**caractérisé en outre par** les stades suivants :
- déserrage du dispositif (21) de serrage et
- séparation du dispositif (21) de serrage de l'écrou (11) de serrage.
